# EUROPÄISCHE PATENTSCHRIFT

(11) **EP 3 638 561 B1**
(45) Veröffentlichungstag und Bekanntmachung des Hinweises auf die Patenterteilung: **02.12.2020**
(21) Anmeldenummer: 18731046.1
(22) Anmeldetag: 11.06.2018
(51) Int. Cl.: B61B 12/06

(54) **VERFAHREN ZUM BETREIBEN EINER SEILBAHN**
METHOD FOR OPERATING A CABLEWAY
PROCÉDÉ POUR FAIRE FONCTIONNER UN TÉLÉPHÉRIQUE

(30) Priorität: 13.06.2017 AT 504952017
(43) Veröffentlichungstag der Anmeldung: 22.04.2020
(73) Patentinhaber: Innova Patent GmbH, 6922 Wolfurt (AT)
(72) Erfinder: PFEIFER, Daniel, 6580 Sankt Anton am Arlberg (AT); BERDNIK, Alexander, 6850 Dornbirn (AT); GISINGER, Stefan, 6922 Wolfurt (AT); FEHLE, Markus, 6922 Wolfurt (AT)
(74) Vertreter: Patentanwälte Pinter & Weiss OG
(86) Internationale Anmeldenummer: PCT/EP2018/065286
(87) Internationale Veröffentlichungsnummer: WO 2018/228971

(56) Entgegenhaltungen:
- EP-A1- 2 067 682
- FR-A1- 2 750 764
- JP-A- 2005 335 488
- JP-A- 2007 326 442
- US-A- 5 363 316

## Beschreibung

Verfahren zum Betreiben einer Seilbahn, wobei die Seilbahn von einer Seilbahnsteuerung gesteuert wird, um eine Vielzahl von Fahrzeugen zwischen einer ersten Station und einer zweiten Station zu bewegen und wobei mit zumindest einer Funktionsüberwachungseinheit eine mit einem Fahrzeug verknüpfte Funktion der Seilbahn überwacht wird, wobei jedem Fahrzeug eine eindeutige Fahrzeugidentifikation zugeordnet wird und die Fahrzeugidentifikation jedes Fahrzeugs in der Seilbahnsteuerung bekannt ist.

Eine Seilbahn, egal ob zum Befördern von Personen oder von Gegenständen, weist in der Regel eine Vielzahl von Funktionsüberwachungseinheiten auf, um die korrekte Funktion der Seilbahn sicherzustellen. Dabei ist es auch egal um welchen Typ Seilbahnen es sich handelt, beispielsweise um eine Luftseilbahn, z.B. in Form einer Gondelbahn, Sesselbahn oder Pendelbahn, bei der die Fahrzeuge auf einem Trag- oder Förderseil hängend transportiert werden, oder um eine Schienenseilbahn, z.B. eine Standseilbahn, bei der die Fahrzeuge auf einem stationären Fahrweg bewegt werden. Gleich ist dabei, dass die Fahrzeuge von einem Seil der Seilbahn gezogen werden.

Je nachdem welche Funktion mit einer Funktionsüberwachungseinheit überwacht wird, wird von der Seilbahnsteuerung bei einer festgestellten Funktionsstörung eine bestimmte Handlung ausgelöst. Das kann beispielsweise eine Warnmeldung oder Fehlermeldung für das Bedienpersonal sein, kann aber auch ein Stillsetzen der Seilbahn sein, wenn die Sicherheit gefährdet ist. Oftmals muss die Funktionsstörung vom Bedienpersonal in der Seilbahnsteuerung quittiert werden, um die Seilbahn wieder in Betrieb nehmen zu können. Dazu kann es auch erforderlich sein, dass das Bedienpersonal einen fehlerhaften Zustand manuell behebt, bevor der Betrieb wiederaufgenommen werden kann. Je nachdem welche Funktion mit einer Funktionsüberwachungseinheit überwacht wird, kann die Funktionsüberwachungseinheit an einer bestimmten Stelle der Seilbahn vorgesehen sein, insbesondere nicht nur in einer Station der Seilbahn, sondern auch auf der Strecke, z.B. an einer Stütze bei einer Luftseilbahn.

Die Fehlersuche an einer Seilbahn kann aber aufgrund der Komplexität einer Seilbahn sehr aufwendig sein. Auch wenn der Betrieb der Seilbahn nach einem Fehler möglich ist, können gewisse Fehler laufend oder häufig auftreten, was natürlich einen ebenso häufigen Eingriff des Bedienpersonals erforderlich macht.

Aus der JP2005/335488 A1 ist es bekannt, die Messwerte einer Federkraftmessung einer Klemmenfeder einer Klemme eines abkoppelbaren Fahrzeugs einer Seilbahn zusammen mit einer eindeutigen Fahrzeugidentifikation in einer Datenbank zu speichern. Das erlaubt die nachträgliche Analyse der gespeicherten Datensätze, um eine schleichende Veränderung an der Federkraft zu erkennen.

Eine Seilbahn muss natürlich auch regelmäßig gewartet werden. Die US 5,363,316 A schlägt dazu vor, jedes Fahrzeug eindeutig zu identifizieren, um für jedes Fahrzeug die Betriebsdauer feststellen zu können. Damit kann die Wartung, insbesondere der Fahrzeuge, gezielt geplant werden. Die Überwachung einer bestimmten Funktion oder die Fehlersuche kann damit aber nicht gelöst werden. Zum technischen Umfeld wird weiterhin die FR 2750764 A1 und die EP 2067682 A1 verwiesen.

Es ist daher eine Aufgabe der gegenständlichen Erfindung, ein Verfahren anzugeben, mit dem die Fehlersuche in einer Seilbahn während des Betriebes der Seilbahn vereinfacht wird. Diese Aufgabe wird gelöst, indem die zumindest eine Funktionsüberwachungseinheit von Fahrzeugen während des Betriebs der Seilbahn ausgelöste Funktionsstörungen in einer Funktionsstatusmeldung an die Seilbahnsteuerung sendet, die Seilbahnsteuerung eine mit einer Funktionsstatusmeldung erhaltene Funktionsstörung dem auslösenden Fahrzeug zuordnet und die Funktionsstörungen gemeinsam mit der Fahrzeugidentifikation des auslösenden Fahrzeugs in der Seilbahnsteuerung abspeichert und ausgewertet werden und in der Seilbahnsteuerung die Häufigkeit von von verschiedenen Fahrzeugen oder vom selben Fahrzeug ausgelösten Funktionsstörungen einer bestimmten Funktionsüberwachungseinheit ausgewertet wird. Das Abspeichern der Funktionsstörungen gemeinsam mit einer eindeutigen Fahrzeugidentifikation erleichtert die Fehlersuche in der Seilbahn, weil man damit einen Hinweis auf einen möglichen Fehlerort und auf ein auslösendes Fahrzeug erhält. Insbesondere bei Seilbahnen mit sehr vielen Fahrzeugen, kann dadurch die Fehlersuch deutlich vereinfacht werden.

Wenn in der Seilbahnsteuerung die Häufigkeit von vom selben Fahrzeug ausgelösten Funktionsstörungen einer bestimmten Funktionsüberwachungseinheit ausgewertet wird, dann kann auf einfache Weise festgestellt werden, ob bestimmte Fahrzeuge für die Funktionsstörung verantwortlich sind, die dann gezielt untersucht oder entfernt werden können.

Wenn in der Seilbahnsteuerung die Häufigkeit von von verschiedenen Fahrzeugen ausgelösten Funktionsstörungen einer bestimmten Funktionsüberwachungseinheit ausgewertet werden, kann auf einfache Weise festgestellt werden, ob und wo es auf Seiten der Seilbahn ein technisches Problem oder Gebrechen geben könnte, was dann gezielt untersucht und behoben werden kann.

Die Fehlersuche kann unterstützt werden, wenn mit der Funktionsüberwachungseinheit zumindest ein Fahrzeugparameter der Fahrzeuge erfasst wird und die erfassten Fahrzeugparameter der Fahrzeuge mit einer Funktionsstatusmeldung an die Seilbahnsteuerung gesendet werden, wo die Fahrzeugparameter dem auslösenden Fahrzeug zugeordnet werden und gemeinsam mit der Fahrzeugidentifikation des auslösenden Fahrzeugs abspeichert und ausgewertet werden.

Wenn in der Seilbahnsteuerung ein zeitlicher Trend eines von einer bestimmten Funktionsüberwachungseinheit erhaltenen Fahrzeugparameters eines bestimmten Fahrzeuges ausgewertet wird, dann kann auf einfache Weise ein schleichender Defekt des Fahrzeugs erkannt werden und das Fahrzeug dann gezielt untersucht oder entfernt werden, oder eine Wartung des Fahrzeugs besser geplant werden.

Wenn in der Seilbahnsteuerung Fahrzeugparameter einer bestimmten Funktionsüberwachungseinheit und von verschiedenen Fahrzeugen ausgewertet werden kann auf einfache Weise festgestellt werden, ob und wo es auf Seiten der Seilbahn ein technisches Problem oder Gebrechen geben könnte, was dann gezielt untersucht und behoben werden kann.

Um flexible auf eine Funktionsstörung reagieren zu können, kann durch die Seilbahnsteuerung in Abhängigkeit von einer erhaltenen Funktionsstörung eine Aktion ausgelöst werden. Die Aktionen können in der Seilbahnsteuerung vorzugsweise konfiguriert werden.

Um der Seilbahnsteuerung die Fahrzeugidentifikationen der Fahrzeuge bekannt zu machen, kann vorgesehen sein, dass die Fahrzeugidentifikationen während des Beschickens der Seilbahn mit den Fahrzeugen erfasst werden und die erfassten Fahrzeugidentifikationen an die Seilbahnsteuerung gesendet werden. Damit kann die Seilbahnsteuerung vor der Inbetriebnahme der Seilbahn auf einfache Weise Kenntnis von den Fahrzeugidentifikationen erlangen. Alternativ oder zusätzlich kann aber auch vorgesehen sein, dass zumindest eine Funktionsüberwachungseinheit eine Fahrzeugidentifikation eines Fahrzeuges erfasst und an die Seilbahnsteuerung sendet, vorzugsweise gemeinsam mit einer Funktionsstörung und/oder einem Fahrzeugparameter in einer Funktionsstatusmeldung. Damit kann die Seilbahnsteuerung auch während des Betriebs Fahrzeugidentifikationen erhalten und beispielsweise zum Verifizieren oder Plausibilisieren der gespeicherten Fahrzeugidentifikationen verwenden.

In einer vorteilhaften Ausgestaltung wird mit einer Funktionsüberwachungseinheit eine Federkraft einer Klemme eines Fahrzeugs erfasst und die erfasste Federkraft als Fahrzeugparameter in der Funktionsstatusmeldung an die Seilbahnsteuerung gesendet wird. Dabei kann vorgesehen sein, dass die Funktionsüberwachungseinheit eine Funktionsstörung in der Funktionsstatusmeldung an die Seilbahnsteuerung sendet, wenn die erfasst Federkraft einen vorgegebenen Grenzwert unterschreitet.

In einer weiteren vorteilhaften Ausgestaltung wird mit einer Funktionsüberwachungseinheit eine Durchfahrt eines Fahrzeugs durch eine definierte Durchfahrtszone in der Station oder zwischen den beiden Stationen überwacht und die Durchfahrtszeit oder ein zurückgelegter Seilweg für die Durchfahrt durch die Durchfahrtszone erfasst und als Fahrzeugparameter in der Funktionsstatusmeldung an die Seilbahnsteuerung gesendet wird. Dabei kann vorgesehen sein, dass die Funktionsüberwachungseinheit eine Funktionsstörung in der Funktionsstatusmeldung an die Seilbahnsteuerung sendet, wenn das Fahrzeug bezüglich eines vorgegebenen Zeitfensters oder eines vorgegebenen Seilwegbereichs zu langsam oder zu schnell durch die Durchfahrtszone bewegt wird.

In einer weiteren vorteilhaften Ausgestaltung wird mit einer Funktionsüberwachungseinheit eine Tür- oder Schließbügelverriegelung eines Fahrzeugs überwacht wird und eine Funktionsstörung in der Funktionsstatusmeldung an die Seilbahnsteuerung gesendet, wenn eine fehlerhafte Tür- oder Schließbügelverriegelung festgestellt wird.

In einer weiteren vorteilhaften Ausgestaltung wird mit einer Funktionsüberwachungseinheit eine Sitzheizung eines Sitzes eines Fahrzeugs überwacht und eine Stromaufnahme der Sitzheizung als Fahrzeugparameter in der Funktionsstatusmeldung an die Seilbahnsteuerung gesendet. Dabei kann vorgesehen sein, dass die Funktionsüberwachungseinheit eine Funktionsstörung in der Funktionsstatusmeldung an die Seilbahnsteuerung sendet, wenn die erfasste Stromaufnahme einen vorgegebenen Grenzwert unterschreitet oder überschreitet.

In einer weiteren vorteilhaften Ausgestaltung wird mit einer Funktionsüberwachungseinheit eine Blende überwacht wird und eine Funktionsstörung in der Funktionsstatusmeldung an die Seilbahnsteuerung gesendet wird, wenn ein Fahrzeug die Blende auslöst.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Station einer Seilbahn,
Fig.2 ein Fahrzeug einer Seilbahn,
Fig.3 die Verwendung eines Funktransponders zum Auslesen einer Fahrzeugidentifikation und
Fig.4 verschiedene Funktionsüberwachungseinheiten in einer Station einer Seilbahn.

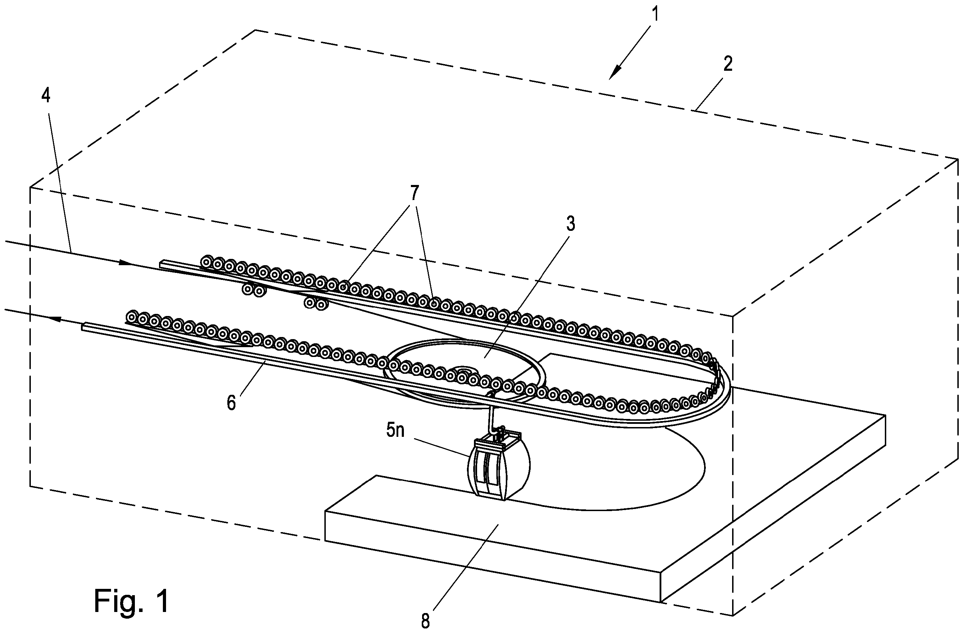

Die Erfindung wird nachfolgend ohne Einschränkung der Allgemeinheit am Beispiel einer Gondelbahn als Ausführungsbeispiel einer hinlänglich bekannten Seilbahn 1, wie in Fig.1 dargestellt, beschrieben. Fig.1 zeigt eine Station 2 (strichliert angedeutet) der Seilbahn 1. In der Station 2 ist eine Seilscheibe 3 angeordnet, über die ein Förderseil 4 der Seilbahn 1 umgelenkt wird. Eine Seilscheibe 3 in einer der Stationen der Seilbahn 1 ist in bekannter Weise durch einen Antrieb angetrieben, um das Förderseil 4 in einer Schleife über eine Seilscheibe einer weiteren Station umlaufen zu lassen. Ebenso ist es bekannt, dass das Förderseil 4 durch eine auf die Seilscheibe 3 wirkende Spanneinrichtung gespannt wird. Aus Gründen der Übersichtlichkeit sind diese an sich bekannten Einrichtungen, insbesondere die zweite Station mit Seilscheibe, Antrieb, Spanneinrichtungen, usw., nicht dargestellt. Eine Seilbahn 1 kann natürlich sehr viele Fahrzeuge 5n, n≥1 gleichzeitig bewegen, typischerweise im Bereich einiger Zehn oder einiger Hundert Fahrzeuge 5n, wobei zwecks Vereinfachung nur eines davon dargestellt ist.

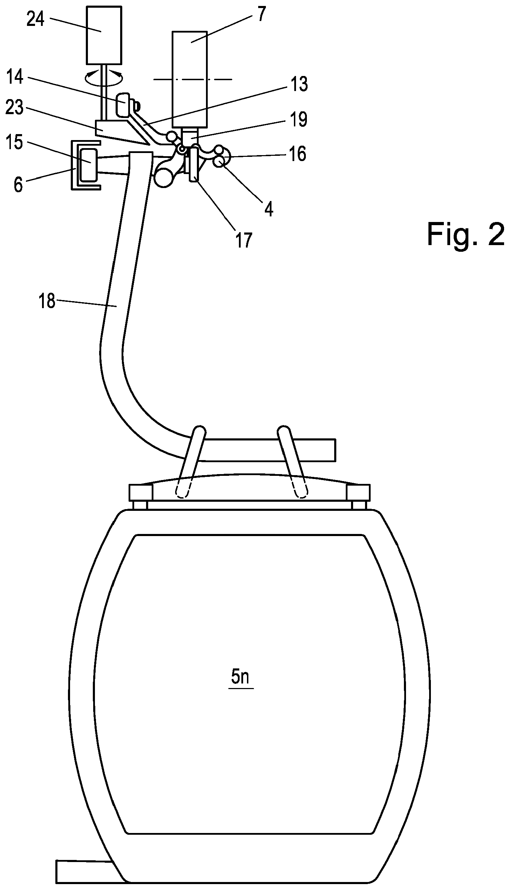

Wenn die Seilbahn 1 nicht mit fix an das Förderseil 4 geklemmten Fahrzeugen 5n ausgestattet ist, wird ein in die Station 2 einfahrendes Fahrzeug 5n der Seilbahn 1 vom Förderseil 4 entkoppelt, in der Regel mittels einer lösbaren Klemme 16 (Fig.2), und wird entlang einer Führungsschiene 6 durch die Station 2 bewegt, in der Regel mit einer deutlich geringeren Geschwindigkeit als auf der Strecke zwischen den beiden Stationen. Entlang der Führungsschiene 6 ist ein Förderer vorgesehen, beispielsweise in Form einer Anzahl von angetriebenen Förderrädern 7, mit dem das Fahrzeug 5n weiterbewegt wird. Beim Ausfahren des Fahrzeugs 5n aus der Station 2 wird das Fahrzeug 5n über den Förderer an der Ausfahrt beschleunigt und wieder mit dem Förderseil 4 gekoppelt, beispielsweise mittels einer Klemme 16.

In der Station 2 ist oftmals auch ein Bahnsteig 8 vorgesehen, über den Personen in die Fahrzeuge 5n zu- oder aussteigen können.

In Fig.2 ist ein vom Förderseil 4 lösbares Fahrzeug 5n, hier eine Kabine, der Seilbahn 1 dargestellt. Das Fahrzeug 5n ist über ein Gehänge 18 mit einem Laufwerk 17, das im einfachsten Fall nur aus einem Laufrad besteht, verbunden. Am Gehänge 18 ist eine Klemme 16 angeordnet, die das Förderseil 4 unter Wirkung einer Klemmenfeder klemmen kann, und die über eine Kuppelrolle 14 und einen Klemmenhebel 13 mechanisch betätigt werden kann. Über Führungsrampen in der Station 2, an denen die Kuppelrolle 14 abrollt, wird der Klemmenhebel 13 betätigt und die Klemme 16 geöffnet. Die Klemme 16 schließt durch die Wirkung der Klemmenfeder. Am Gehänge 18 ist auch eine Führungsrolle 15 angeordnet, die in der Station 2 mit der Führungsschiene 6 zusammenwirkt. Ebenso ist ein Reibbelag 19 angeordnet, der mit dem Förderer, beispielsweise den sich drehenden Förderrädern 7, zusammenwirken kann, um das abgekoppelte Fahrzeug 5n entlang der Führungsschiene 6 durch die Station 2 zu bewegen.

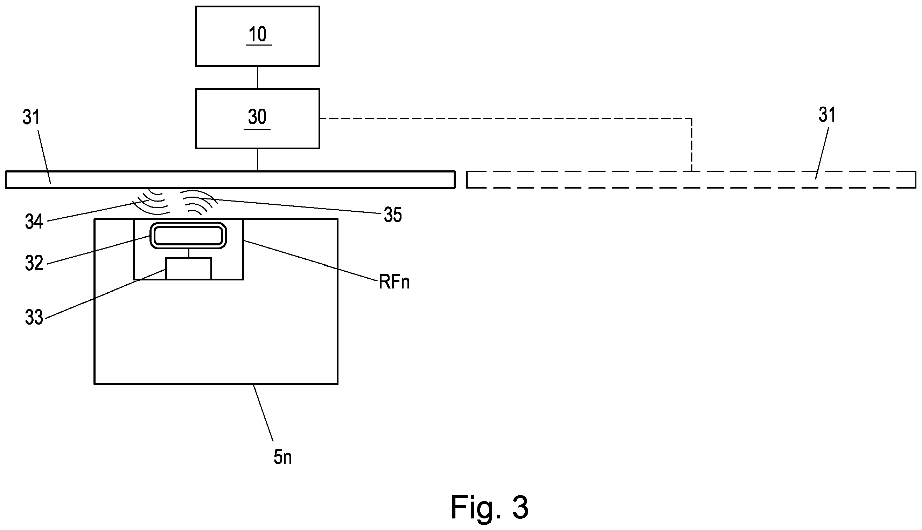

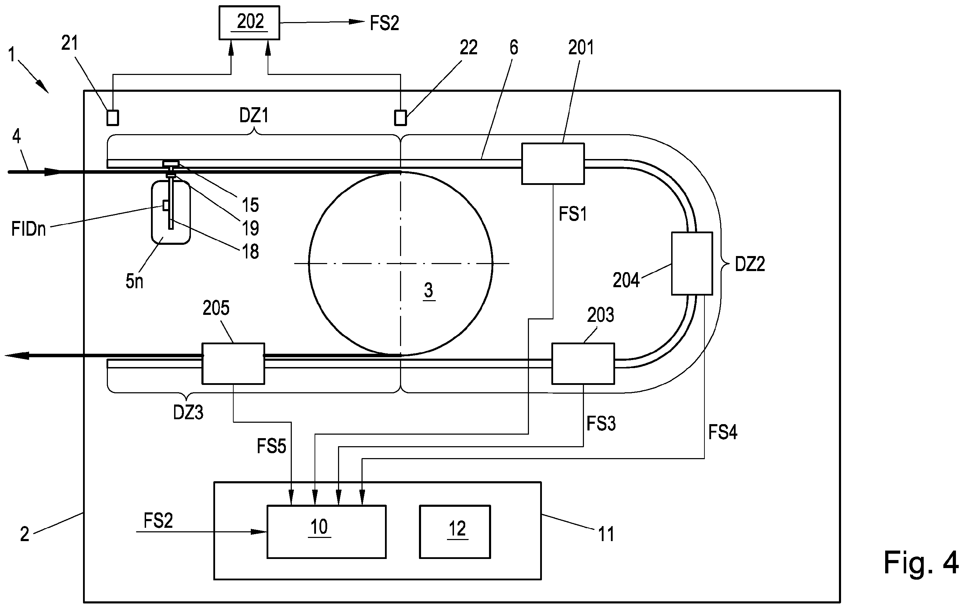

Die Seilbahn 1 wird von einer Seilbahnsteuerung 10, in Form von geeigneter Hardware und Software, gesteuert, wie in Fig.3 und Fig.4 angedeutet. Die Seilbahnsteuerung 10 ist in der Regel auf mehrere Steuerungseinheiten, beispielsweise speicherprogrammierbare Steuerungen (SPS) und Zentralrechner, verteilt, die miteinander verbunden sind und die gemeinsam die Steuerung der Seilbahn 1 realisieren. Die Steuerungseinheiten können dabei bestimmten Teilen oder Baugruppen der Seilbahn 1 zugeordnet sein. Eine Seilbahn 1 umfasst normalerweise auch einen Kommandoraum 11 (Fig.4), von dem aus alle Funktionen der Seilbahn 1 über die Seilbahnsteuerung 10 überwacht und gesteuert werden können. Hierzu sind natürlich im Kommandoraum 11 und/oder in der Station 2 auch entsprechende Eingabe- und Anzeigeeinheiten 12, wie Tasten, Knöpfe, Tastatur, Bildschirme, Leuchten, etc., vorgesehen.

Der Aufbau und die Funktionsweise einer Seilbahn 1 und deren Bestandteile ist hinlänglich bekannt, sodass hier nur soweit darauf eingegangen wird, soweit es für das Verständnis der Erfindung erforderlich ist.

Eine Seilbahn 1 umfasst auch eine Anzahl i≥1 von Funktionsüberwachungseinheiten 20i, die eine bestimmte, mit einem Fahrzeug 5n verknüpfte Funktion der Seilbahn 1 überwachen. Bisher werden schon von den Funktionsüberwachungseinheiten 20i Funktionsstörungen, in Form einer Abweichung der Funktion von einer erwarteten Normalfunktion, an die Seilbahnsteuerung 10 gesendet, die gewisse, mit einer Funktionsstörung verknüpfte Aktionen auslösen. Eine Aktion kann beispielsweise die Anzeige einer Warnmeldung über die Eingabe- und Anzeigeeinheiten 12, das Ausgeben einer Fehlermeldung, die automatisch zu einem Nothalt führt, das Stillsetzen der Seilbahn 1, das Ausschleusen eines Fahrzeugs 5n, oder aber auch eine Aktion die von einem Bedienpersonal auszuführen ist (beispielsweise Kontrolle der Funktionsüberwachungseinheit, Deaktivierung der Einheit, rückwärtsfahren, abermalige Prüfung, Fahrzeug ausschleusen, Notantrieb fahren etc.) sein. Während des Betriebs der Seilbahn 1 kann es aufgrund der großen Anzahl von Fahrzeigen 5n zu oftmaligen Funktionsstörungen kommen, womit eine Fehlersuche mitunter schwierig ist, da aufgrund der Funktionsstörung alleine nicht sicher auf einen Fehler oder einen Fehlerort geschlossen werden kann. Das soll durch die Erfindung verbessert werden.

Dazu wird erfindungsgemäß vorgesehen, dass jedes der n≥1 Fahrzeuge 5n mit einer eindeutigen Fahrzeugidentifikation FIDn versehen wird. Die Fahrzeugidentifikation FIDn kann mit einem Lesegerät gelesen werden. Die Fahrzeugidentifikation FIDn kann grundsätzlich beliebiger Art sein, ebenso wie die Implementierung des Lesegeräts zum Auslesen der Fahrzeugidentifikation FIDn. Beispielsweise kann ein Barcode, QR-Code oder ähnliches optisch ausgelesen werden, beispielsweise mit Laser, mit Bilderfassung und Auswertung oder mit Infrarot. Auch die Verwendung von Ultraschall oder Mikrowelle mit geeigneten Fahrzeugidentifikationen FIDn ist denkbar.

Ganz besonders vorteilhaft ist aber die Verwendung von Funktranspondern RFn, wie beispielsweise RFID (Radio Frequency Identification)-Transponder (oftmals auch RFID-Tag genannt), zum Speichern der Fahrzeugidentifikation FIDn, wie anhand der Fig.3 erläutert. Hierbei bieten sich insbesondere passive Funktransponder RFn, z.B. passive RFID-Transponder, an, weil dazu keine Energieversorgung der Funktransponder RFn am Fahrzeug 5n notwendig ist. Ein passiver Funktransponder ist nur im Wirkbereich einer Sendeantenne 31 eines Lesegerätes 30, die ein elektromagnetisches Feld aufspannt, aktiv, da der passive Funktransponder RFn die Energie zum Betreiben aus dem von der Sendeantenne 31 ausgesendeten elektromagnetischen Signal gewinnt, das mit einer Empfangsantenne 32 im Funktransponder RFn empfangen wird. Im Funktransponder RFn kann eine eindeutige Fahrzeugidentifikation FIDn in einer nicht volatilen Speichereinheit 33 gespeichert werden, die ausgelesen und an das Lesegerät 30 gesendet werden kann. Das Lesegerät 30 kann die Speichereinheit 33 in gewissen Ausführungen auch beschreiben, beispielsweise um eine eindeutige Fahrzeugidentifikation FIDn in der Speichereinheit 33 abzuspeichern. Ein derartiger Funktransponder RFn kann sehr klein ausgeführt werden und kann daher sehr flexibel eingesetzt werden. Im Wirkbereich der Sendeantenne 31, die ein Abfragesignal 34 aussendet, antwortet der Funktransponder RFn mit einem Antwortsignal 35, das die Fahrzeugidentifikation FIDn enthält. Das Antwortsignal 35 wird von der Sendeantenne 31 empfangen und an das Lesegerät 30 weitergeleitet, die aus dem Antwortsignal 35 die Fahrzeugidentifikation FIDn decodiert. Das Lesegerät 30 ist mit der Seilbahnsteuerung 10 verbunden und kann die Fahrzeugidentifikation FIDn an die Seilbahnsteuerung 10 senden. An ein Lesegerät 30 können auch mehrere Sendeantennen 31 angeschlossen werden, wie in Fig.3 angedeutet.

Je nach Geschwindigkeit des vorbeifahrenden Fahrzeugs 5n, typischerweise im Bereich von 0,3m/s bis 7m/s bei einer Seilbahn 1 kann die Sendeantenne 31 verschieden lang (in Bewegungsrichtung des Fahrzeugs gesehen) sein. Die Sendeantenne 31 ist vorzugsweise auch biegsam, um die Sendeantenne 31 an verschiedenen Stellen der Seilbahn 1 oder einer Station 2 anordnen zu können.

Die Sendeantenne 31 und der Funktransponder RFn sind selbstverständlich so anzuordnen, dass der Funktransponder RFn in den Wirkbereich der Sendeantenne 31 gelangen kann. Beispielsweise könnte der Funktransponder RFn am Gehänge 18 oder am Laufwerk 17 des Fahrzeugs 5n angeordnet sein und die Sendeantenne 31 an der Führungsschiene 16 in der Station 2. Wobei hierzu natürlich noch viele weitere Möglichkeiten bestehen.

Die Seilbahnsteuerung 10 weiß im Normalbetrieb zu jedem Zeitpunkt wo sich die Fahrzeuge 5n befinden. Aufgrund der immer bekannten Geschwindigkeit des Förderseils 4, der Förderseillänge und gegebenenfalls auch der Geschwindigkeit der abgekoppelten Fahrzeuge 5n in der Station lässt sich das einfach bewerkstelligen. Durch die Verwendung eindeutiger Fahrzeugidentifikationen FIDn weiß die Seilbahnsteuerung 10 nun nicht nur wo sich ein Fahrzeug 5n befindet, sondern auch welches Fahrzeug 5n sich wo befindet. Die Fahrzeugidentifikation FIDn jedes Fahrzeugs 5n kann hierzu an zumindest einer beliebigen Stelle der Seilbahn 1 ausgelesen werden. Es ist aber natürlich auch denkbar, die Fahrzeugidentifikation FIDn an mehreren Stellen auszulesen.

Beispielsweise kann vorgesehen sein, dass die Seilbahnsteuerung 10 beim Beschicken der Seilbahn 1 mit Fahrzeugen 5n vor dem Betriebsstart die Fahrzeugidentifikation FIDn jedes Fahrzeugs 5n erfasst. Dazu kann beispielsweise beim Beschicken im Bereich der Weichen vom Bahnhof für Fahrzeuge 5m in die Hauptbahn der Seilbahn 1 die Fahrzeugidentifikation FIDn gelesen werden, beispielsweise in dem eine Sendantenne 31 in diesem Bereich angeordnet wird. Das mit der Sendeantenne 31 verbundene Lesegerät 30 meldet dann die jeweilige Fahrzeugidentifikation FIDn an die Seilbahnsteuerung 10. Damit kennt die Seilbahnsteuerung 10 auch die Reihenfolge der Fahrzeuge 5n auf dem Förderseil 4.

Das ermöglicht es der Seilbahnsteuerung 10, einer von einer Funktionsüberwachungseinheit 20i erhaltene Funktionsstatusmeldung FSi, bzw. die darin enthaltenen Funktionsstörungen und/oder Fahrzeugparameter, einem bestimmten Fahrzeug 5n zuzuordnen, das die Funktionsstatusmeldung FSi ausgelöst hat. Die Seilbahnsteuerung 10 speichert nun eine erhaltene Funktionsstatusmeldung FSi, bzw. die darin enthaltenen Funktionsstörungen und/oder Fahrzeugparameter, mit der Fahrzeugidentifikation FIDn ab. Das ermöglicht es, dass die gespeicherten Funktionsstatusmeldungen FSi, bzw. die darin enthaltenen Funktionsstörungen und/oder Fahrzeugparameter, beispielsweise hinsichtlich eines Trends oder einer Häufung untersucht werden können, um Rückschlüsse zu einer Fehlerursache zu erhalten, was die Fehlersuche deutlich vereinfachen kann, wie nachfolgend noch im Detail ausgeführt wird.

Es ist hierbei ebenso vorteilhaft, wenn mit einer Funktionsstatusmeldung FSi nicht nur eine Funktionsstörung übermittelt werden kann, sondern auch ein mit einer Funktionsüberwachungseinheit 20i festgestellter Fahrzeugparameter, weil damit die Fehlersuche unterstützt werden kann. Eine Funktionsstatusmeldung FSi kann aber natürlich auch beides umfassen, also eine Funktionsstörung und einen Fahrzeugparameter.

Je nachdem welche Funktion überwacht wird, kann eine Funktionsüberwachungseinheit 20i an verschiedenen Stellen der Seilbahn 1 angeordnet sein. Typische Funktionsüberwachungseinheiten 20i werden nachfolgend mit Bezugnahme auf die Fig.4 beispielhaft und nicht einschränkend beschrieben.

Eine Funktionsüberwachungseinheit 201 prüft beispielsweise in der Station 2 bei jedem Stationsumlauf der Fahrzeuge 5n die Federkraft der Klemmenfeder der Klemme 16 eines Fahrzeugs 5n. Die Funktionsüberwachungseinheit 201 ist dazu vorzugsweise an einer Stelle angeordnet, an der die Klemme 16 vom Förderseil 4 abgekoppelt ist. In der Funktionsüberwachungseinheit 201 kann beispielsweise der Klemmenhebel 13 gegen die Wirkung der Klemmenfeder betätigt werden und dabei die aufgewendete Kraft, die ein Maß für die Federkraft darstellt, gemessen werden. Die gemessene Federkraft wird als Fahrzeugparameter in einer Funktionsstatusmeldung FS1 der Funktionsüberwachungseinheit 201 an die Seilbahnsteuerung 10 gesendet. Die Funktionsüberwachungseinheit 201 könnte aber beim Feststellen eines Funktionsfehlers, beispielsweise wenn die Federkraft unter einem notwendigen, vorgegebenen Grenzwert absinkt, mit der Funktionsstatusmeldung FS1 eine Funktionsstörung an die Seilbahnsteuerung 10 senden, eventuell gemeinsam mit dem Fahrzeugparameter. In der Seilbahnsteuerung 10 wird dann eine entsprechende Aktion ausgelöst. Im Falle einer Funktionsstörung könnte die Seilbahn 1 stillgesetzt werden, oder das Ausschleusen des die Funktionsstörung verursachenden Fahrzeugs 5n durch das Bedienpersonal veranlasst werden.

Im Bereich der Funktionsüberwachungseinheit 201 kann auch zusätzlich eine Fahrzeugidentifikation FIDn ausgelesen werden, obwohl man davon ausgehen kann, dass die Seilbahnsteuerung 10 das Fahrzeug 5n kennt, das sich gerade im Bereich der Funktionsüberwachungseinheit 201 befindet. Wenn die Fahrzeugidentifikation FIDn nochmals ausgelesen wird, können mögliche Fehler in der Seilbahnsteuerung 10 erkannt werden. Beispielsweise könnte sich durch einen Betriebsfehler die Position eines Fahrzeugs 5n am Förderseil 4 ändern, oder ein Fahrzeug 5n könnte im schlimmsten Fall auch verloren gehen.

Die Funktionsstatusmeldungen FS1, oder die darin enthaltenen Fahrzeugparameter, werden in der Seilbahnsteuerung 10 gemeinsam mit der Fahrzeugidentifikation FIDn abgespeichert, z.B. in einer geeigneten Datenbank. Das ermöglicht es einen Trend zur Verschlechterung der Federkraft festzustellen.

Dazu könnten in der Seilbahnsteuerung 10, beispielsweise mittels geeigneter Softwaretools zum Auswerten, die Datensätze, die zu einer Funktionsstatusmeldung FSi der Funktionsüberwachungseinheit 20i gehören, für ein bestimmtes Fahrzeug 5n ausgefiltert werden, was über die gespeicherte Fahrzeugidentifikation FIDn einfach möglich ist, und der zeitliche Verlauf des gespeicherten Fahrzeugparameters ausgewertet werden. Beispielsweise könnte die gemessene Federkraft ausgegeben oder dargestellt oder anderweitig ausgewertet werden. Anhand dieser Trendauswertung ist es auch möglich einen Bruch einer Klemmfeder (in der Regel sind mehrere Klemmfedern vorhanden) in einem Sprung der Federkraft festzustellen.

Ebenfalls mittels geeigneter Softwaretools können die gespeicherten Funktionsstörungen analysiert werden. Beispielsweise könnte die Häufigkeit von einer vom selben Fahrzeug 5n ausgelösten Funktionsstörung einer bestimmten Funktionsüberwachungseinheit 20i ausgewertet wird. Wenn immer dasselbe Fahrzeug 5n eine Funktionsstörung auslöst, dann kann das ein eindeutiger Hinweis auf einen Defekt des Fahrzeugs 5n sein. Gleichfalls könnte in der Seilbahnsteuerung 10 die Häufigkeit von von verschiedenen Fahrzeugen 5n ausgelösten Funktionsstörungen einer bestimmten Funktionsüberwachungseinheit 20i ausgewertet werden. Wird eine bestimmte Funktionsstörung von verschiedenen Fahrzeugen 5n ausgelöst, dann kann das ein Hinweis auf einen Defekt im Bereich der Funktionsüberwachungseinheit 20i oder in der Seilbahnkomponente, die von der Funktionsüberwachungseinheit 20i überwacht wird, sein.

Insbesondere, aber nicht nur, bei lösbar gekoppelten Fahrzeugen 5n ist der Stationsumlauf logisch oftmals in sogenannten Durchfahrtszonen DZm, m≥1 aufgeteilt, beispielsweise eine Durchfahrtszone DZ1, in der das Fahrzeug 5n vom Förderseil 4 entkoppelt und verzögert wird, eine Durchfahrtszone DZ2, in der Personen zu- oder aussteigen, und eine Durchfahrtszone DZ3, in der das Fahrzeug 5n beschleunigt und mit dem Förderseil 4 gekoppelt wird. Natürlich sind auch mehr oder weniger Durchfahrtszonen DZm denkbar. Grundsätzlich befindet sich immer nur ein Fahrzeug 5n in einer Durchfahrtszone DZm, was durch eine entsprechende Einteilung der Durchfahrtszonen DZm einfach sichergestellt werden kann. Das wird am Beispiel einer Durchfahrtszonen DZ1 beschrieben, wobei das aber allgemein für jede Durchfahrtszone DZm gilt.

Eine Funktionsüberwachungseinheit 202 ist nun als Durchfahrsicherung für die Durchfahrtszone DZ1 ausgestaltet. Damit soll sichergestellt werden, dass ein Fahrzeug 5n innerhalb eines definierten Zeitfensters durch die Durchfahrtszone DZ1 bewegt wird. Anstelle von Zeit könnte natürlich auch der zurückgelegte Seilweg verwendet werden, da Zeit und zurückgelegter Seilweg natürlich äquivalent sind. Zur Durchfahrsicherung kann daher äquivalent überprüft werden, ob für ein Fahrzeug 5n zu viel oder zu wenig Seilweg zurückgelegt wurde. Dazu kann der zurückgelegte Seilweg in der Station 2 auch direkt gemessen werden. Die Wegmessung hat den Vorteil, dass man damit von der Seilgeschwindigkeit (und damit von der Zeit) unabhängig ist. Ist das Fahrzeug 5n zu langsam oder zu schnell wird der vorgegebene zulässige Seilwegbereich verletzt, und es muss von einer Störung ausgegangen werden. Eine solche Funktionsstörung wird mit einer Funktionsstatusmeldung FS2 an die Seilbahnsteuerung 10 gesendet. Die Seilbahnsteuerung 10 schaltet die Seilbahn 1 in diesem Fall ab. Zusätzlich könnte zu jeden durch die Durchfahrtszone DZ1 durchfahrenden Fahrzeug 5n die Durchfahrtszeit oder der Seilweg für die Durchfahrt als Fahrzeugparameter in einer Funktionsstatusmeldung FS2 an die Seilbahnsteuerung 10 übermittelt werden. Jede Funktionsstatusmeldung FS2 wird in der Seilbahnsteuerung 10 wieder gemeinsam mit der zugeordneten Fahrzeugidentifikation FIDn abgespeichert.

Das ermöglicht wieder eine Auswertung der gespeicherten Funktionsstatusmeldungen FS2, bzw. der darin übermittelten Funktionsstörungen und Fahrzeugparameter. Hierzu kann wieder mit geeigneten Softwaretools zur Auswertung der Trend der Durchfahrtszeit für ein bestimmtes Fahrzeug 5n untersucht werden. Ist ein Trend erkennbar, dass ein Fahrzeug 5n immer schneller durch die Durchfahrtszone DZ1 bewegt wird, kann das an einem verschlissenen oder vereisten Reibbelag 19 liegen. Wenn ein Fahrzeug 5n im Trend immer langsamer durch die Durchfahrtszone DZ1 bewegt wird, kann das ein Hinweis auf einen mechanischen Defekt sein. Wenn hingegen festgestellt wird, dass unterschiedliche Fahrzeuge 5n in der gleichen Durchfahrtszone DZ1 eine Funktionsstörung melden, dann kann das ein Hinweis auf ein Problem mit den Förderern, z.B. den Förderrädern 7, beispielsweise zu geringer Reifendruck, in der Durchfahrtszone DZ1 oder mit dem Antrieb der Förderer, beispielsweise zu wenig gespannte Keilriemen, in der Durchfahrtszone DZ1 sein. Durch die Auswertung der gespeicherten Funktionsstatusmeldungen FS2 kann damit die Fehlersuche erheblich erleichtert und beschleunigt werden.

Die Durchfahrtszeit durch die Durchfahrtszone DZ1 kann beispielsweise erfasst werden, in dem die Einfahrt eines Fahrzeuges 5n in die Durchfahrtszone DZ1 durch einen ersten Sensor 21 am Anfang der Durchfahrtszone DZ1 erfasst wird und in der Funktionsüberwachungseinheit 202 die Zeit gemessen wird, bis das Fahrzeug 5n die Durchfahrtszone DZ1 wieder verlässt, was durch einen zweiten Sensor 22 an Ende der Durchfahrtszone DZ1 festgestellt werden kann. Die Zeit kann dabei auch als Zählerstand erfasst werden, indem ein Zähler gestartet wird, wenn das Fahrzeug 5n in die Durchfahrtszone DZ1 einfährt und der Zähler gestoppt wird, wenn das Fahrzeug 5n die Durchfahrtszone DZ1 verlässt. Auf grundsätzlich gleicher Art und Weise kann auch der in der Durchfahrtszone DZ1 zurückgelegte Seilweg erfasst werden.

Der erste Sensor 21 und/oder der zweite Sensor 22 könnte dabei auch durch das Auslesen einer Fahrzeugidentifikation FIDn implementiert sein, beispielsweise als Lesegerät 30 für einen Funktransponder. Wird eine Fahrzeugidentifikation FIDn ausgelesen, kann das als Zeitpunkt für die Einfahrt bzw. Ausfahrt aus der Durchfahrtszone DZ1 herangezogen werden.

Bei Verwendung eines Funktransponders RFn zum Speichern der Fahrzeugidentifikation FIDn könnte die Sendeantenne 31 (oder auch mehrere Sendeantennen 31 gemeinsam) in Bewegungsrichtung des Fahrzeugs 5n die gesamte Länge der Durchfahrtszone DZ1 abdecken. Aufgrund der bekannten Normalgeschwindigkeit des Fahrzeugs 5n in der Durchfahrtszone DZm und der Eigenschaften der verbauten Funktransponder RFn, ist bekannt, wieviele Lesevorgänge des Funktransponders RFn am Fahrzeug 5n in der Durchfahrtszone DZ1 möglich sind. Beispielsweise sind in einer typischen Implementierung bei einer Länge der Sendeantenne 31 von 7m und einer Fahrzeuggeschwindigkeit von 7m/s 6-8 Lesungen möglich. Wenn nun in der Durchfahrtszone DZ1 weniger als 6 Lesungen oder mehr als 8 Lesungen erfolgen, kann davon ausgegangen werden, dass das Fahrzeug 5n entweder zu langsam oder zu schnell durch die Durchfahrtszonen DZ1 gefahren ist. Auch das könnte als hinreichend genauer Zähler für die Durchfahrsicherung verwendet werden.

Eine Durchfahrtszone DZm muss aber nicht unbedingt in der Station 2 sein. Es könnte auch an der Strecke zwischen zwei Stationen eine Durchfahrtszone DZm mit einer Funktionsüberwachungseinheit 20i zur Durchfahrsicherung vorgesehen sein. Beispielsweise könnte eine Rollenbatterie an einer Stütze der Seilbahn 1 als Durchfahrtszone DZm definiert werden, um sicherzustellen, dass entlang der Rollenbatterie keine Fahrzeuge 5n hängenbleiben.

Ein weiteres Beispiel für eine Funktionsüberwachungseinheit 203 ist die Überwachung einer Tür- oder Schließbügelverriegelung eines Fahrzeugs 5n. Zur Sicherheit der Fahrgäste werden Fahrzeuge 5n nach dem Zusteigen nicht nur verschlossen (z.B. mit einer Tür bei einer Gondel oder einem Schließbügel bei einem Sessel), sondern die Tür und der Schließbügel auch mechanisch verriegelt, um ein ungewolltes oder missbräuchliches Öffnen des Fahrzeugs 5n auf der Strecke zu verhindern. Die Funktionsüberwachungseinheit 203 soll dabei das Ausfahren oder überhaupt das Anfahren des Fahrzeugs 5n bei fehlerhafter Verriegelung verhindern. Hierzu ist in der Station 2 im Bereich, in dem die Tür- oder Schließbügel geschlossen und verriegelt wird, eine hinlänglich bekannte Verriegelungsüberwachungseinheit angeordnet, die den Status der Verrieglung erfasst und an die Funktionsüberwachungseinheit 203 meldet. Bei nicht ordnungsgemäßer Verrieglung sendet die Funktionsüberwachungseinheit 203 eine Funktionsstatusmeldung FS3 mit einer Funktionsstörung an die Seilbahnsteuerung 10. Die Seilbahnsteuerung 10 hält darauf die Seilbahn 1 an, oder löst eine andere gewünschte Aktion aus. Der Status der Verriegelung könnte auch mit der im Fahrzeug 5n gespeicherten Fahrzeugidentifikation FIDn an die Funktionsüberwachungseinheit 203 gesendet werden, die die Fahrzeugidentifikation FIDn damit auch an die Seilbahnsteuerung 10 weiterreichen kann. In der Seilbahnsteuerung 10 wird die Funktionsstatusmeldung FS3 wieder mit der Fahrzeugidentifikation FIDn des auslösenden Fahrzeugs 5n gespeichert. Durch Auswerten der gespeicherten Funktionsstatusmeldungen FS3, bzw. der damit übermittelten Funktionsstörungen, mittels geeigneter Softwaretools kann festgestellt werden, ob es bei einem bestimmten Fahrzeug 5n zu einer Häufung solcher Funktionsstörungen kommt, was einen Hinweis auf einen Defekt der Verriegelung am Fahrzeug 5n sein kann.

Ein weiteres Beispiel für eine Funktionsüberwachungseinheit 204 ist die Überwachung einer Sitzheizung eines Fahrzeugs 5n, hier z.B. eines Sessels. Während der Stationsdurchfahrt des Fahrzeugs 5n durch die Station 2 erfolgt die Heizphase der Sitzheizung, indem die Sitzheizung des Fahrzeugs 5n über Stromschienen in der Station 2 mit elektrischer Energie versorgt wird. Hierbei kann die Stromaufnahme des Fahrzeugs 5n während der Heizphase durch die Funktionsüberwachungseinheit 204 erfasst werden. Die erfasste Stromaufnahme kann als Fahrzeugparameter in einer Funktionsstatusmeldung FS4 an die Seilbahnsteuerung 10 gesendet werden. Wenn die Funktionsüberwachungseinheit 204, bezüglich vorgegebener Grenzwerten, eine zu geringe oder eine zu hohe Stromaufnahme feststellt, kann mit einer Funktionsstatusmeldung FS4 auch eine Funktionsstörung an die Seilbahnsteuerung 10 gemeldet werden. In der Seilbahnsteuerung 10 wird die Funktionsstatusmeldung FS4 wieder mit der Fahrzeugidentifikation FIDn des auslösenden Fahrzeugs 5n gespeichert. Durch Auswerten der gespeicherten Funktionsstatusmeldungen FS4 mittels geeigneter Softwaretools kann festgestellt werden, ob es bei einem bestimmten Fahrzeug 5n zu einer Häufung solcher Funktionsstörungen kommt, was einen Hinweis auf einen Defekt der Sitzheizung am Fahrzeug 5n sein kann. Ebenso könnte wieder der zeitliche Trend der Stromaufnahme eines Fahrzeug 5n ausgewertet werden, um eine Verschlechterung festzustellen. Wenn unterschiedliche Fahrzeuge 5n Funktionsstörungen melden oder unterschiedliche Fahrzeuge 5n einen ähnlichen Verschlechterungstrend zeigen, könnte das auch ein Hinweis auf einen Defekt auf Seiten der Station 2 sein.

Ein weiteres Beispiel einer Funktionsüberwachungseinheit 205 ist eine sogenannte Blende 23 (Fig.2), die im Bereich eines bestimmten Bauteils des Fahrzeugs 5n angeordnet ist und so geformt ist, dass der Bauteil bei normaler erwarteter Ausrichtung, Lage, Position des Bauteils an der Blende vorbeibewegt wird, ohne die Blende zu berühren. Bei einer unerwarteten Ausrichtung, Lage, Position des Bauteils kontaktiert der Bauteil hingegen die Blende, die durch die Bewegung des Fahrzeugs 5n ausgelöst wird, beispielsweise durch Verdrehen oder Verschieben der Blende 23, was durch eine beliebige Sensorik 24 erfasst werden kann und z.B. an die Funktionsüberwachungseinheit 205 gemeldet wird. Das Auslösen einer Blende 23 ist in der Regel eine Funktionsstörung, die von der Funktionsüberwachungseinheit 205 in einer Funktionsstatusmeldung FS5 an die Seilbahnsteuerung 10 gesendet wird. Dort wird die Funktionsstatusmeldung FS5 wieder dem auslösenden Fahrzeug 5n zugeordnet und die Funktionsstatusmeldung FS5 gemeinsam mit der Fahrzeugidentifikation FIDn in der Seilbahnsteuerung 10 abgespeichert. Durch Auswerten der gespeicherten Funktionsstatusmeldungen FS5 mittels geeigneter Softwaretools kann festgestellt werden, ob es bei einem bestimmten Fahrzeug 5n zu einer Häufung solcher Funktionsstörungen kommt, was einen Hinweis auf einen Fehler am Fahrzeug 5n, beispielsweise ein vereister oder gebrochener Bauteil, sein kann.

Eine Funktionsüberwachungseinheit 20i kann dabei in Form geeigneter Hardware, beispielsweise ein Computer oder eine SPS, und/oder in Form von Software ausgeführt sein.

Obwohl nicht unbedingt notwendig, kann in jeder Funktionsüberwachungseinheit 20i die Fahrzeugidentifikation FIDn eines Fahrzeugs 5n im Bereich der Funktionsüberwachungseinheit 20i ausgelesen und ebenfalls an die Seilbahnsteuerung 10 gesendet werden.

Die Art und Weise wie die Funktionsstatusmeldungen FSi, oder die Funktionsstörungen oder Fahrzeugparameter, in der Seilbahnsteuerung 10 gespeichert werden, ist an sich beliebig. Es bietet sich natürlich eine Datenbank an, in der ein Datensatz pro Funktionsstatusmeldung FSi mit Fahrzeugidentifikation FIDn und Funktionsstörung (eventuell in Form eines eindeutigen Codes) und/oder Fahrzeugparameter (vorzugsweise als Messwert) gespeichert ist. Ein Datensatz kann dabei auch noch mit einem Zeitstempel versehen sein, der das Eintreffen der Funktionsstatusmeldungen FSi markiert.

## Patentansprüche

1. Verfahren zum Betreiben einer Seilbahn (1), wobei die Seilbahn (1) von einer Seilbahnsteuerung (10) gesteuert wird, um eine Vielzahl n von Fahrzeugen (5n) zwischen einer ersten Station (2) und einer zweiten Station zu bewegen und wobei mit zumindest einer Funktionsüberwachungseinheit (20i) eine mit einem Fahrzeug (5n) verknüpfte Funktion der Seilbahn (1) überwacht wird, wobei jedem Fahrzeug (5n) eine eindeutige Fahrzeugidentifikation (FIDn) zugeordnet wird und die Fahrzeugidentifikation (FIDn) jedes Fahrzeugs (5n) in der Seilbahnsteuerung (10) bekannt ist, **dadurch gekennzeichnet, dass** die zumindest eine Funktionsüberwachungseinheit (20i) von Fahrzeugen (5n) während des Betriebs der Seilbahn (1) ausgelöste Funktionsstörungen in einer Funktionsstatusmeldung (FSi) an die Seilbahnsteuerung (10) sendet, **dass** die Seilbahnsteuerung (10) eine mit der Funktionsstatusmeldung (FSi) erhaltene Funktionsstörung dem auslösenden Fahrzeug (5n) zuordnet, dass die Funktionsstörungen gemeinsam mit der Fahrzeugidentifikation (FIDn) des auslösenden Fahrzeugs (5n) in der Seilbahnsteuerung (10) abspeichert und ausgewertet werden **und dass** in der Seilbahnsteuerung (10) die Häufigkeit von von verschiedenen Fahrzeugen (5n) oder vom selben Fahrzeug ausgelösten Funktionsstörungen einer bestimmten Funktionsüberwachungseinheit (20i) ausgewertet wird.

2. Verfahren nach Anspruch 1, **dadurch gekennzeichnet, dass** mit der Funktionsüberwachungseinheit (20i) zumindest ein Fahrzeugparameter der Fahrzeuge (5n) erfasst wird und die erfassten Fahrzeugparameter der Fahrzeuge (5n) mit einer Funktionsstatusmeldung (FSi) an die Seilbahnsteuerung (10) gesendet werden, wo die Fahrzeugparameter dem auslösenden Fahrzeug (5n) zugeordnet werden und gemeinsam mit der Fahrzeugidentifikation (FIDn) des auslösenden Fahrzeugs (5n) abspeichert und ausgewertet werden.

3. Verfahren nach Anspruch 2, **dadurch gekennzeichnet, dass** in der Seilbahnsteuerung (10) ein zeitlicher Trend eines von einer bestimmten Funktionsüberwachungseinheit (20i) erhaltenen Fahrzeugparameters eines bestimmten Fahrzeuges ausgewertet wird.

4. Verfahren nach Anspruch 2, **dadurch gekennzeichnet, dass** in der Seilbahnsteuerung (10) Fahrzeugparameter einer bestimmten Funktionsüberwachungseinheit (20i) und von verschiedenen Fahrzeugen (5n) ausgewertet werden.

5. Verfahren nach einem der Ansprüche 1 bis 4, **dadurch gekennzeichnet, dass** durch die Seilbahnsteuerung (10) in Abhängigkeit von einer erhaltenen Funktionsstörung eine Aktion an der Seilbahn (1) ausgelöst wird.

6. Verfahren nach einem der Ansprüche 1 bis 5, **dadurch gekennzeichnet, dass** Fahrzeugidentifikationen (FIDn) der Fahrzeuge (5n) während des Beschickens der Seilbahn (1) mit den Fahrzeugen (5n) erfasst wird und die erfassten Fahrzeugidentifikationen (FIDn) an die Seilbahnsteuerung (10) gesendet werden.

7. Verfahren nach einem der Ansprüche 1 bis 6, **dadurch gekennzeichnet, dass** zumindest eine Funktionsüberwachungseinheit (20i) eine Fahrzeugidentifikation (FIDn) eines Fahrzeuges (5n) erfasst und an die Seilbahnsteuerung (10) sendet, vorzugsweise gemeinsam mit einer Funktionsstörung und/oder einem Fahrzeugparameter in einer Funktionsstatusmeldung (FSi).

8. Verfahren nach einem der Ansprüche 1 bis 7, **dadurch gekennzeichnet, dass** mit einer Funktionsüberwachungseinheit (201) eine Federkraft einer Klemme eines Fahrzeugs (5n) erfasst wird und die erfasste Federkraft als Fahrzeugparameter in der Funktionsstatusmeldung (FS1) an die Seilbahnsteuerung (10) gesendet wird.

9. Verfahren nach Anspruch 8, **dadurch gekennzeichnet, dass** die Funktionsüberwachungseinheit (201) eine Funktionsstörung in der Funktionsstatusmeldung (FS1) an die Seilbahnsteuerung (10) sendet, wenn die erfasste Federkraft einen vorgegebenen Grenzwert unterschreitet.

10. Verfahren nach einem der Ansprüche 1 bis 7, **dadurch gekennzeichnet, dass** mit einer Funktionsüberwachungseinheit (202) eine Durchfahrt eines Fahrzeugs (5n) durch eine definierte Durchfahrtszone (DZ1, DZ2, DZ3) in der Station (2) oder zwischen den beiden Stationen überwacht wird und die Durchfahrtszeit oder ein zurückgelegter Seilweg für die Durchfahrt durch die Durchfahrtszone (DZ1, DZ2, DZ3) erfasst und als Fahrzeugparameter in der Funktionsstatusmeldung (FS2) an die Seilbahnsteuerung (10) gesendet wird.

11. Verfahren nach Anspruch 10, **dadurch gekennzeichnet, dass** die Funktionsüberwachungseinheit (202) eine Funktionsstörung in der Funktionsstatusmeldung (FS2) an die Seilbahnsteuerung (10) sendet, wenn das Fahrzeug (5n) bezüglich eines vorgegebenen Zeitfensters oder eines vorgegebenen Seilwegbereichs zu langsam oder zu schnell durch die Durchfahrtszone (DZ1, DZ2, DZ3) bewegt wird.

12. Verfahren nach einem der Ansprüche 1 bis 7, **dadurch gekennzeichnet, dass** mit einer Funktionsüberwachungseinheit (203) eine Tür- oder Schließbügelverriegelung eines Fahrzeugs (5n) überwacht wird und eine Funktionsstörung in der Funktionsstatusmeldung (FS3) an die Seilbahnsteuerung (10) gesendet wird, wenn eine fehlerhafte Tür- oder Schließbügelverriegelung festgestellt wird.

13. Verfahren nach einem der Ansprüche 1 bis 7, **dadurch gekennzeichnet, dass** mit einer Funktionsüberwachungseinheit (204) eine Sitzheizung eines Sitzes eines Fahrzeugs (5n) überwacht wird und eine Stromaufnahme der Sitzheizung als Fahrzeugparameter in der Funktionsstatusmeldung (FS4) an die Seilbahnsteuerung (10) gesendet wird.

14. Verfahren nach Anspruch 13, **dadurch gekennzeichnet, dass** die Funktionsüberwachungseinheit (204) eine Funktionsstörung in der Funktionsstatusmeldung (FS4) an die Seilbahnsteuerung (10) sendet, wenn die erfasste Stromaufnahme einen vorgegebenen Grenzwert unterschreitet oder überschreitet.

15. Verfahren nach einem der Ansprüche 1 bis 7, **dadurch gekennzeichnet, dass** mit einer Funktionsüberwachungseinheit (205) eine Blende (23) überwacht wird und eine Funktionsstörung in der Funktionsstatusmeldung (FS5) an die Seilbahnsteuerung (10) gesendet wird, wenn ein Fahrzeug (5n) die Blende (23) auslöst.

## Claims

1. A method of operating a cableway (1), wherein the cableway (1) is controlled by a cableway control system (10) to move a plurality n of cars (5n) between a first station (2) and a second station, and wherein at least one function monitoring unit (20i) monitors a function of the cableway (1) linked to a car (5n), wherein each car (5n) is assigned a unique car identification (FIDn) and the car identification (FIDn) of each car (5n) is known in the cableway control system (10), **characterized in that** the at least one function monitoring unit (20i) transmits malfunctions triggered by cars (5n) during the operation of the cableway (1) to the cableway control system (10) in a function status message (FSi), **that** the cableway control system (10) assigns a malfunction that was received with the function status message (FSi) to the triggering car (5n), **that** the malfunctions together with the car identification (FIDn) of the triggering car (5n) are stored and evaluated in the cableway control system (10) **and that** in the cableway control system (10) the frequency of a malfunction of a particular function monitoring unit (20i) triggered by different cars (5n) or the same car (5n) is evaluated in the cableway control system (10).

2. Method according to any one of claims 1, **characterized in that** the function monitoring unit (20i) detects at least one car parameter of the cars (5n) and that the detected car parameters of the cars (5n) are transmitted to the cableway control system (10) with a function status message (FSi) where the car parameters are assigned to the triggering car (5n) and are stored and evaluated together with the car identification (FIDn) of the triggering car (5n).

3. Method according to claim 2, **characterized in that,** in the cableway control system (10) a trend of a car parameter of a particular car received from a particular function monitoring unit (20i) over time is evaluated.

4. Method according to claim 2, **characterized in that** car parameters of a particular function control unit (20i) and of different cars (5n) are evaluated in the cableway control system (10).

5. Method according to any one of claims 1 to 4, **characterized in that** an action on the cableway (1) is triggered by the cableway control system (10) in response to a malfunction received.

6. Method according to any one of claims 1 to 5, **characterized in that** the car identifications (FIDn) of the cars (5n) are detected during the loading of the cableway (1) with the cars (5n) and that the detected car identifications (FIDn) are transmitted to the cableway control system (10).

7. Method according to any one of claims 1 to 6, **characterized in that** at least one function monitoring unit (20i) detects a car identification (FIDn) of a car (5n) and transmits it to the cableway control system (10), preferably together with a malfunction and/or a car parameter in a function status message (FSi).

8. Method according to any one of claims 1 to 7, **characterized in that** a function monitoring unit (201) detects a spring force of a clamp of a car (5n) and that the detected spring force is transmitted in the function status message (FS1) to the cableway control system (10) as a car parameter.

9. Method according to claim 8, **characterized in that** the function monitoring unit (201) transmits a function status message (FS1) about a malfunction to the cableway control system (10) when the detected spring force falls below a predetermined limit.

10. Method according to any one of claims 1 to 7, **characterized in that** a passage of a car (5n) is monitored with a function monitoring unit (202) in a defined passage zone (DZ1, DZ2, DZ3) in the station (2) or between the two stations, and the time of passage or a traveled cable distance for the passage through the passage zone (DZ1, DZ2, DZ3) is detected and transmitted as a car parameter in the function status message (FS2) to the cableway control system (10).

11. Method according to claim 10, **characterized in that** the function monitoring unit (202) may transmit a function status message (FS2) about a malfunction to the cableway control system (10) when the car (5n) is moved too slowly or too fast through the passage zone (DZ1, DZ2, DZ3) with respect to a predetermined time window or a predetermined cable distance range.

12. Method according to any one of claims 1 to 7, **characterized in that** a door or restraining bar lock of a car (5n) is monitored with a function monitoring unit (203) and that a function status message (FS3) with a malfunction is transmitted to the cableway control system (10) when a faulty door or restraining bar lock is detected.

13. Method according to any one of claims 1 to 7, **characterized in that** a function monitoring unit (204) monitors a seat heater of a seat of a car (5n) and that the power consumption of the seat heater is transmitted in the function status message (FS4) to the cableway control system (10) as a car parameter.

14. Method according to claim 13, **characterized in that** the function monitoring unit (204) transmits a malfunction in the function status message (FS4) to the cableway control system (10) when the detected power consumption falls below or exceeds a predetermined limit.

15. Method according to any one of claims 1 to 7, **characterized in that** a function monitoring unit (205) monitors a barrier (23) and that a malfunction in the function status message (FS5) is transmitted to the cableway control system (10) when a car (5n) triggers the barrier (23).

## Revendications

1. Procédé permettant de faire fonctionner un téléphérique (1), le téléphérique (1) étant commandé par une commande (10) du téléphérique pour déplacer une pluralité n de véhicules (5n) entre une première station (2) et une seconde station, et un fonctionnement du téléphérique (1) associé à un véhicule (5n) étant surveillé par au moins une unité de surveillance de fonctionnement (20i), une identification (FIDn) univoque du véhicule étant associée à chaque véhicule (5n) et l'identification (FIDn) de chaque véhicule (5n) étant connue dans la commande (10) du téléphérique, **caractérisé en ce qu'au** moins une unité de surveillance de fonctionnement (20i) des véhicules (5n) envoie des dysfonctionnements déclenchés pendant le fonctionnement du téléphérique (1) dans un message de statut (FSi) de fonctionnement à la commande (10) du téléphérique, **en ce que** la commande (10) du téléphérique associe un dysfonctionnement, reçu conjointement avec le message de statut (FSi) de fonctionnement, au véhicule (5n) présentant le déclenchement, **en ce que** les dysfonctionnements sont mis en mémoire et évalués conjointement avec l'identification (FIDn) du véhicule (5n) présentant le déclenchement dans la commande (10) du téléphérique, et **en ce que** la fréquence des dysfonctionnements d'une unité de surveillance de fonctionnement (20i) spécifique déclenchés par différents véhicules (5n) ou par le même véhicule est évaluée dans la commande (10) du téléphérique.

2. Procédé selon la revendication 1, **caractérisé en ce qu'au** moins un paramètre des véhicules (5n) est détecté par l'unité de surveillance de fonctionnement (20i) et **en ce que** les paramètres détectés des véhicules (5n) sont envoyés conjointement avec un message de statut (FSi) de fonctionnement à la commande (10) du téléphérique, les paramètres de véhicule étant associés au véhicule (5n) présentant le déclenchement et étant mis en mémoire et évalués conjointement avec l'identification (FIDn) du véhicule (5n) présentant le déclenchement.

3. Procédé selon la revendication 2, **caractérisé en ce qu'**une tendance temporelle d'un paramètre d'un véhicule spécifique reçu d'une unité de surveillance de fonctionnement (20i) spécifique est évaluée dans la commande (10) du téléphérique.

4. Procédé selon la revendication 2, **caractérisé en ce que** des paramètres de véhicules d'une unité de surveillance de fonctionnement (20i) spécifique et de différents véhicules (5n) sont évalués dans la commande (10) du téléphérique.

5. Procédé selon l'une des revendications 1 à 4, **caractérisé en ce qu'**une action est déclenchée au niveau du téléphérique (1) par la commande (10) du téléphérique en fonction d'un dysfonctionnement reçu.

6. Procédé selon l'une des revendications 1 à 5, **caractérisé en ce que** des identifications (FIDn) des véhicules (5n) sont détectées pendant le chargement du téléphérique (1) avec les véhicules (5n) et **en ce que** les identifications (FIDn) de véhicule détectées sont envoyées à la commande (10) du téléphérique.

7. Procédé selon l'une des revendications 1 à 6, **caractérisé en ce qu'au** moins une unité de surveillance de fonctionnement (20i) détecte une identification (FIDn) d'un véhicule (5n) et l'envoie à la commande (10) du téléphérique, de préférence conjointement avec un dysfonctionnement et/ou un paramètre du véhicule dans un message de statut (FSi) de fonctionnement.

8. Procédé selon l'une des revendications 1 à 7, **caractérisé en ce qu'**une force élastique d'une pince d'un véhicule (5n) est détectée par une unité de surveillance de fonctionnement (201) et **en ce que** la force élastique détectée est envoyée à la commande (10) du téléphérique comme paramètre du véhicule dans le message de statut (FS1) de fonctionnement.

9. Procédé selon la revendication 8, **caractérisé en ce que** l'unité de surveillance de fonctionnement (201) envoie un dysfonctionnement dans le message de statut (FS1) de fonctionnement à la commande (10) du téléphérique lorsque la force élastique détectée est inférieure à une valeur limite prédéfinie.

10. Procédé selon l'une des revendications 1 à 7, **caractérisé en ce qu'**une traversée par un véhicule (5n) d'une zone de passage définie (DZ1, DZ2, DZ3) dans la station (2) ou entre les deux stations est surveillée par une unité de surveillance de fonctionnement (202) et **en ce que** le temps de passage ou un chemin de câble parcouru pour la traversée de la zone de passage (DZ1, DZ2, DZ3) est détecté et envoyé à la commande (10) du téléphérique comme paramètre du véhicule dans le message de statut (FS2) de fonctionnement.

11. Procédé selon la revendication 10, **caractérisé en ce que** l'unité de surveillance de fonctionnement (202) envoie un dysfonctionnement dans le message de statut (FS2) de fonctionnement à la commande (10) du téléphérique lorsque le véhicule (5n) se déplace dans la zone de passage (DZ1, DZ2, DZ3) trop lentement ou trop rapidement par rapport à une fenêtre temporelle prédéfinie ou à une plage de chemin de câble prédéfinie.

12. Procédé selon l'une des revendications 1 à 7, **caractérisé en ce qu'**un verrouillage de porte ou d'arc de fermeture d'un véhicule (5n) est surveillé par une unité de surveillance de fonctionnement (203) et **en ce qu'**un dysfonctionnement dans le message de statut (FS3) de fonctionnement est envoyé à la commande (10) du téléphérique lorsqu'un verrouillage de porte ou d'arc de fermeture défectueux est détecté.

13. Procédé selon l'une des revendications 1 à 7, **caractérisé en ce qu'**un chauffage d'un siège d'un véhicule (5n) est surveillé par une unité de surveillance de fonctionnement (204) et **en ce qu'**une consommation de courant du chauffage de siège est envoyée à la commande (10) du téléphérique comme paramètre de véhicule dans le message de statut (FS4) de fonctionnement.

14. Procédé selon la revendication 13, **caractérisé en ce que** l'unité de surveillance de fonctionnement (204) envoie un dysfonctionnement dans le message de statut (FS4) de fonctionnement à la commande (10) du téléphérique lorsque la consommation de courant détectée est inférieure ou supérieure à une valeur limite prédéfinie.

15. Procédé selon l'une des revendications 1 à 7, **caractérisé en ce qu'**un diaphragme (23) est surveillé par une unité de surveillance de fonctionnement (205) et **en ce qu'**un dysfonctionnement dans le message de statut (FS5) de fonctionnement est envoyé à la commande (10) du téléphérique lorsqu'un véhicule (5n) déclenche le diaphragme (23).
